# EUROPEAN PATENT SPECIFICATION

(11) **EP 3 570 397 B1**
(45) Date of publication and mention of the grant of the patent: **13.01.2021**
(21) Application number: 19173779.0
(22) Date of filing: 10.05.2019
(51) Int. Cl.: H02G 3/12

(54) **MOUNTING BRACKET ASSEMBLY FOR ELECTRICAL INSTALLATION BOX**
MONTAGEHALTERUNGSANORDNUNG FÜR EINEN ELEKTRISCHEN INSTALLATIONSKASTEN
ENSEMBLE DE SUPPORT DE MONTAGE POUR BOÎTIER D'INSTALLATION ÉLECTRIQUE

(30) Priority: 17.05.2018 IN 201831018538
(43) Date of publication of application: 20.11.2019
(73) Proprietor: Schneider Electric Industries SAS, 92500 Rueil-Malmaison (FR)
(72) Inventor: NAYAK, Gireesh Anant, 581314 KARNATAKA (IN); CHIKKANNA, Manohar, 560073 KARNATAKA (IN); KULLOLLI, Dharmveer, 560040 BANGALORE (IN); VANAMANE, Vivek, 416415 MAHARASHTRA (IN)
(74) Representative: Swea IP Law AB

(56) References cited:
- EP-A1- 2 903 110
- US-A- 2 320 621
- US-A1- 2005 092 510
- US-A1- 2015 333 493

## Description

### TECHNICAL FIELD OF THE INVENTION

The present invention relates to an electrical installation box that is to be placed in building structures and more particularly relates to a mounting bracket assembly for mounting the installation box to an installation beam.

### BACKGROUND OF THE INVENTION

Electrical installation boxes are used to terminate an electrical conduit in a structure frame. The installation boxes are attached to wooden or metal beams using a mounting bracket. The mounting bracket is then attached to an installation surface for example, concrete, bricks, plaster boards and wooden boards of varying thickness. Hence the mounting bracket must be compatible with different installation conditions.

In conventional electrical installation systems, the mounting bracket is fixed to the beam by means of external nails or screws. Such prior art approach requires skilled persons to integrate the mounting bracket with the mounting box and the beam. Also, the mounting box may be accidentally removed from the mounting bracket by external forces or the mounting box may slip out from the mounting bracket when it pushed by cables in existing solutions which may damage the electrical parts on the mounting box. Furthermore, the adjustment of the mounting box with respect to the installation surface is performed only after removing the bracket from the mounting box. Hence, installation of the conventional mounting bracket assembly takes a substantially long time due to the required adjustment for the board/wall thickness and does not provide smooth operation.

EP2903110 discloses a mounting bracket assembly for an electrical installation box comprising a mounting box having a circular projection and rails, an L-shape beam member and an L shaped bracket having a flange, whereby the beam member and the bracket slide on the rails and the flange is bent to lock the beam member with the mounting box.

US2320621 discloses a box having connected back and side walls and an opening through said back wall adjoining the side wall and a bracket for mounting said box, including a hooked end portion extendible through said opening, a brace portion to lie against the inside face of the adjoining side wall, an outwardly angled supporting arm projecting outwardly over the rim of said side. wall and means for rigidly securing said supporting arm portion of the bracket to said side wall, Including an upwardly Projecting lug on the rim of said side wall, the supporting arm having an opening to pass said lug and a spring tongue at the edge of said opening to snap over and into locking engagement with said lug.

US2005/092510 discloses an adjustable outlet box assembly for attachment of an outlet box to a wall stud. The assembly includes an outlet box and a box bracket which is adjustably positioned to the outlet box.

US2015/333493 discloses an electrical box bracket includes features allowing it to engage multiple surfaces of a stud. The bracket has a front face for mounting an electrical box and a plaster ring, and a far-side tab bent backwards from the front face for making contact with a drywall behind the bracket.

Therefore, it is necessary to provide an improved mounting bracket assembly for the electrical installation box that is effectively assembled and adjusted at various heights and is compatible with various dimensions of the installation beam.

### SUMMARY OF THE INVENTION

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the present invention to provide for an improved robust mounting bracket assembly for an electrical installation box which is capable of eliminating damage to electrical parts inside the installation box and providing smooth operation.

It is another aspect of the present invention to provide an improved adjustable mounting bracket assembly that is effectively assembled and adjusted based on various dimensions of an installation beam and simplifies the installation process.

It is further aspect of the present invention to provide an improved mounting bracket assembly that is easily attached to the installation box and the installation beam and is inexpensive, dependable and fully effective in accomplishing its intended purposes.

It is yet another aspect of the present invention to provide an improved mounting bracket assembly with an inbuilt attachment element for attaching the mounting bracket to the installation beam.

In accordance with a first embodiment of the present invention, a mounting bracket assembly for an electrical installation box is disclosed which includes a mounting box having four side walls and a circular projection with an open end on its top side. The mounting box further includes two laterally spaced rails on each side walls and two projections on each bottom side of the mounting box. An L shape beam member is composed of a top horizontal plate with a plurality of in-built nails and slots through which the L shape beam member is attached to a beam. The L shape beam member includes a vertical plate having an extended portion with two slots spaced apart from each other at its open end. An L shaped bracket is formed on one side of the vertical plate and a J shaped bracket is formed on its other side. A flange is located on the top side of the L shaped bracket and the J shaped bracket. The L shaped bracket and the J shaped bracket slides on the rails on one side wall, and the flange is bent to lock the L shape beam member with the mounting box. The slots on the vertical plate is also positioned and locked with the projections on the mounting box to firmly hold the mounting box.

The vertical plate is composed of a plurality of sliders that provides additional support to lock the L shape beam member with the mounting box. The L shaped bracket is composed of a securing element for securing the L shape beam member with the mounting box. The rails located on other sides of the mounting box hold a plurality of stubs or another mounting box. The in-built nails are placed perpendicular to the top horizontal plate through which the L shape beam member is attached to a wooden beam. The in-built nails are re-bent and the L shape beam member is attached to a metal beam via the slots.

In accordance with a second embodiment of the present invention, an adjustable mounting bracket assembly for an electrical installation box includes a mounting box having four side walls and a circular projection with an open end on its top side. The mounting box is composed of two laterally spaced rails on each side walls with at least two semicircular recesses spaced apart from each other along a longitudinal axis of the brackets. An L shape adjustable beam member is composed of a vertical plate and a top horizontal plate with a plurality of in-built nails and slots through which the L shape beam member is attached to a beam.

An L shaped bracket is formed on one side of the vertical plate and aj shaped bracket is formed on its other side. The L shaped bracket and the J shaped bracket further includes a semicircular hook located at its end. The L shape beam member is locked with the mounting box at multiple locations in such a way that the L shaped bracket and thej shaped bracket slide on the rails so that the semicircular hook is positioned and locked within a first semicircular recess at a first location. Alternatively, the semicircular hook is also positioned and locked within a second semicircular recess at a second location. The L shape beam member is adjusted to achieve different heights based on size of an installation beam.

In accordance with a third embodiment of the present invention, a rotatable mounting bracket assembly for an electrical installation box includes a mounting box having four side walls and a circular projection with an open end on its top side. The mounting box is composed of four wedges located on diagonally opposite sides of the circular projection at its upper side and a lower side. A rotatable beam member is composed of an opening with a wedge shape recess on its corner and a curved projection in between the wedge shape recess with a hook at each end of the curved projection.

The beam member is locked with the mounting box at multiple locations in such a way that the beam member is assembled from top side of the mounti ng box using the circular projection and the wedge shape recess are placed parallel to the wedges of the mounting box. The beam member is rotated so that the hook is positioned and locked with the wedges on the upper side of the mounting box at a first location. Alternatively, the hook is also positioned and locked with the wedges on the lower side of the mounting box at a second location. The wedges on the upper side of the mounting box are placed at 12 mm height from a top end of the circular projection and the wedges on the lower side of the mounting box are placed at 24 mm height from the top end of the circular projection. The beam member is composed of a plurality of slots through which the beam member is attached to an installation box.

In accordance with a fourth embodiment of the present invention, a side dual clip mounting bracket assembly for an electrical installation box includes a mounting box having four side walls and a circular projection with an open end on its top side. The mounting box is composed of two laterally spaced rails on each side walls with an aperture located on the rails. An L shape side dual clip beam member having a top horizontal plate and a vertical plate with at least two projections spaced apart from each other along a longitudinal axis of the vertical plate at its both sides. The L shape beam member is locked with the mounting box at multiple locations. The vertical plate slides on the rails so that a first projection is positioned and locked within the aperture at a first location. Alternatively, a second projection is also positioned and locked within the aperture at a second location. The L shape beam member is composed of a plurality of slots through which the beam member is attached to an installation beam. The L shape beam member is adjusted to achieve different heights based on various dimensions of the installation beam.

In accordance with a fifth embodiment of the present invention, a dual side slide lock mounting bracket assembly for an electrical installation box includes a mounting box having four side walls and a circular projection with an open end on its top side. The mounting box having two laterally spaced rails on each side walls. An L shape dual side slide lock beam member is composed of a first plate with an L shape cutout on its both sides and a second plate with a saw tooth cutout on its both sides. The L shape beam member is locked with the mounting box in such a way that the first plate slides on the rails so that the L shape cut out is positioned and locked within the rails. Alternatively, the second plate also slides on the rails so that the saw tooth cut out is positioned and locked within the rails. The first plate and the second plate further include a plurality of slots through which the beam member is attached to an installation beam.

In accordance with a sixth embodiment of the present invention, a manual gear lever mounting bracket assembly for an electrical installation box includes a mounting box having four side walls and a circular projection with an open end on its top side. The mounti ng box is composed of two laterally spaced rails on each side walls with two slots located on each side of the brackets. An L shape manual gear lever beam member is composed of a top horizontal plate and a vertical plate with a hook on its both sides. The L shape beam member is locked with the mounting box at multiple locations in such a way that the, the vertical plate slides on the rails so that the hook is positioned and locked within a first slot at a first location, or hook is positioned and locked within a second slot at a second location.

### BRIEF DESCRIPTION OF THE DRAWINGS

The disclosed embodiments may be better understood by referring to the figures, in which like reference numerals refer to identical or functionally-similar elements throughout the separate views, further illustrate the present invention and, together with the detailed description of the invention, serve to explain the principles of the present invention.
FIG. 1 illustrates a perspective view of an L shape beam member, in accordance with an exemplary first embodiment of the present invention;
FIG. 2 illustrates a perspective view of a mounting box and the L shape beam member, in accordance with an exemplary first embodiment of the present invention;
FIG. 3 illustrates a front view of a mounting bracket assembly with the mounting box assembled with the L shape beam member, in accordance with an exemplary first embodi ment of the present i nventi on;
FIG. 4 illustrates a perspective view of the mounting bracket assembly, an installation beam and an installation board, in accordance with an exemplary first embodiment of the present invention;
FIGS. 5-6 illustrate a cross sectional view of the mounting bracket assembly showing a flange before and after bending, in accordance with an exemplary first embodiment of the present invention;
FIG. 7 illustrates a perspective view of the mounting bracket assembly with the mounting box assembled with the L shape beam member and a plurality of stubs, in accordance with an exemplary first embodiment of the present invention;
FIGS. 8-9 illustrate a front and back view of an adjustable L shape beam member, in accordance with an exemplary second embodiment of the present invention;
FIG. 10 illustrates an assembled view of an adjustable mounting bracket assembly assembled at a first location, in accordance with an exemplary second embodiment of the present invention;
FIG. 11 illustrates an assembled view of the adjustable mounting bracket assembly assembled at a second location, in accordance with an exemplary second embodiment of the present invention;
FIG. 12 illustrates a cross sectional view of the adjustable mounting bracket assembly, in accordance with an exemplary second embodiment of the present invention;
FIGS. 13-14 illustrate a side view of a rotatable beam member, in accordance with an exemplary third embodiment of the present invention;
FIGS. 15-17 illustrate an assembled view of a rotatable mounting bracket assembly showing the rotatable beam member locked with the mounting box at multiple locations, in accordance with an exemplary third embodiment of the present invention;
FIG. 18 illustrates a perspective view of an L shape side dual clip beam member, in accordance with an exemplary fourth embodiment of the present invention;
FIG. 19 illustrates an assembled view of a side dual clip mounting bracket assembly assembled at a first location, in accordance with an exemplary fourth embodiment of the present invention;
FIG. 20 illustrates an assembled view of the side dual clip mounting bracket assembly assembled at a second location, in accordance with an exemplary fourth embodiment of the present invention;
FIG. 21 illustrates a cross sectional view of the side dual clip mounting bracket assembly, in accordance with an exemplary fourth embodiment of the present invention;
FIG. 22 illustrates a perspective view of an L shape dual side lock beam member, in accordance with an exemplary fifth embodi ment of the present i nventi on;
FIG. 23 illustrates a perspective view of an L shape dual side lock mounting bracket assembly showing a first plate locked with the mounting box, in accordance with an exemplary fifth embodiment of the present invention;
FIG. 24 illustrates a perspective view of the L shape dual side lock beam member, in accordance with an exemplary fifth embodiment of the present invention;
FIG. 25 illustrates a perspective view of the L shape dual side lock mounting bracket assembly showing a second plate locked with the mounting box, in accordance with an exemplary fifth embodiment of the present invention;
FIG. 26 illustrates a perspective view of a manual gear lever L shape beam member, in accordance with an exemplary sixth embodiment of the present invention;
FIG. 27 illustrates a perspective view of a manual gear lever mounting bracket assembly assembled at a first location, in accordance with an exemplary sixth embodiment of the present invention; and
FIG. 28 illustrates a perspective view of the manual gear lever mounting bracket assembly assembled at a second location, in accordance with an exemplary sixth embodiment of the present invention.

### DETAILED DESCRIPTION OF THE INVENTION

The particular values and configurations discussed in these non-limiting examples can be varied and are cited merely to illustrate at least one embodiment and are not intended to limit the scope thereof.

In the following, numerous specific details are set forth to provide a thorough description of various embodiments. Certain embodiments may be practiced without these specific details or with some variations in detail. In some instances, certain features are described in less detail so as not to obscure other aspects. The level of detail associated with each of the elements or features should not be construed to qualify the novelty or importance of one feature over the others.

The claimed subject matter has been provided here with reference to one or more features or embodiments. Those skilled in the art will recognize and appreciate that, despite of the detailed nature of the exemplary embodiments provided here; changes and modifications may be applied to said embodiments without limiting or departing from the generally intended scope. These and various other adaptations and combinations of the embodiments provided here are within the scope of the disclosed subject matter as defined by the claims and their full set of equivalents. Like numbers refer to like elements throughout.

The present invention relates to various embodiments of a mounting bracket assembly for an electrical installation box. The mounting bracket assembly is effectively assembled and adjusted based on various dimensions of an installation beam and simplifies the installation process. This assembly is capable of eliminating damage to electrical parts inside the installation box and providing smooth operation. The present invention has an inbuilt attachment element for attaching the mounting bracket to the installation beam. The mounting bracket assembly is capable of eliminating damage to the electrical parts on the mounting box and providing smooth operation, which results in increasing the life time of the mounting box. The present invention also eliminates the need for skilled persons to do the mounting process for the integration of the mounting box with the beam and the height adjustment process based on thickness of the beam Thus, the mounting bracket assembly is easily attached to the installation beam and is inexpensive, dependable and fully effective in accomplishing its intended purposes.

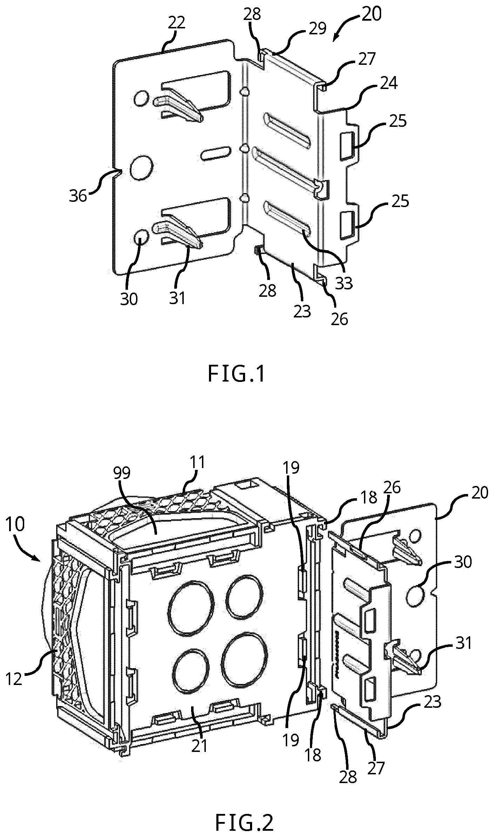

Referring to FIG. 1 a perspective of an L shape beam member (20) is illustrated, in accordance with an exemplary first embodiment of the present invention. The L shape beam member (20) comprises a top horizontal plate (22) and a vertical plate (23). The top horizontal plate (22) includes a plurality of in-built nails (31) and slots (30) through which the L shape beam member (20) is attached to an installation beam (38). The installation beam (38) may be made of any of a variety of suitable materials, for example steel, another metal, or plastic, based on design consideration. The vertical plate (23) includes an extended portion (24) at its open end with two slots (25) spaced apart from each other.

The L shape beam member (20) further comprises an L shaped bracket (26) formed on one side of the vertical plate (23) and a J shaped bracket (27) formed on its other side. The L shaped bracket (26) and the J shaped bracket (27) include a flange (28) on its top side. In a preferred embodiment, the L shape beam member (20) may be made of any of a variety of suitable materials, for example steel, another metal, or plastic. Suitable fabrication steps, such as stamping, cutting, and bending, may be used to manufacture the L shape beam member (20).

Referring to FIG. 2 a perspective view of a mounting box (10) and the L shape beam member (20) is illustrated, in accordance with an exemplary first embodiment of the present invention. Note that in FIGS. 1-28, identical or similar parts or components are generally indicated by identical reference numerals. The mounting box (10) is composed of four side walls (11, 12, 13, 14) and a circular projection (15) with an open end (16) on its top side (17). The mounting box (10) is an electrical box for receiving an electrical wire and/or data cable. The mounting box (10) further includes two laterally spaced rails (18) on each side walls (11, 12, 13, 14) and two projections (19) on each bottom side (21) of the mounting box (10). Note that the installation box is also referred as mounting box only for the purpose of explanation, but not by the way of any limitations.

The shape of the mounting box (10) is generally rectangular, square, or cylindrical. The projection (15) is generally circular but may have other shapes, depending upon design considerations. The mounting box (10) has an inner space for accommodating a connection component for electric wiring. The mounting box (10) alternatively may have any of a variety of other suitable configurations that allow it to engage the L shape beam member (20) for mounting. The sliding rails (18) hold 5 degrees of freedom and also consist of the bent projection (42) which arrests all degrees of freedom. The top horizontal flat plate (22) provides 90 degree support to the mounting box (10). The four side walls (11, 12, 13, 14) and the back side of the mounting box (10) is composed of a plurality of knock out members (99) for access to the interior of the mounting box (10) from the side walls (11, 12, 13, 14) and back for wiring or the like.

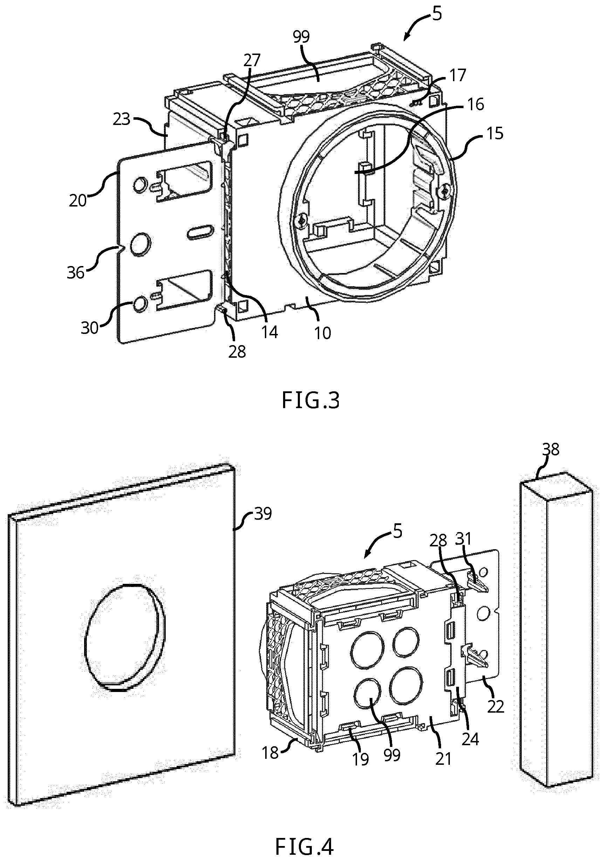

Referring to FIG. 3 which is a front view of a mounting bracket assembly (5), the mounting box (10) is assembled with L shape beam member (20), in accordance with an exemplary first embodiment of the present invention. The L shaped bracket (26) and thej shaped bracket (27) slide on the rails (18) on any one of the side wall. The L shaped bracket (26) and the J shaped bracket (27) slides on the rails (18) from the back side of the mounting box (10). The flange (28) located on top side of the vertical plate (23) is bent to lock the L shape beam member (20) with the mounting box (10). The slots (25) on the horizontal plate (22) are positioned and locked with the projections (19) on the mounting box (10) to firmly hold the mounting box (10) and do not allow the mounting box (10) to come out due to hammer impacts and to create less load on the slots (25). The top horizontal plate (22) further includes an aligning feature (36) to align the L shape beam member (20) with the mounting box (10).

FIG. 4 illustrates a perspective view of the mounting bracket assembly (5), the installation beam (38) and an installation board (39), in accordance with an exemplary first embodiment of the present invention. The mounting bracket assembly (5) that holds the mounting box (10) is attached to the installation beam (38) using the slots (30) or in-built nails (31) and it is sandwiched between the installation beam (38) and the installation board (39). The vertical plate (23) is composed of a plurality of sliders (33) that provide additional support to lock the L shape beam member (20) with the mounting box (10). The L shaped bracket (26) is composed of a securing element (32) for securing the L shape beam member (20) with the mounting box (10). The in-built nails (31) are placed perpendicular to the top horizontal plate (22) through which the L shape beam member (20) is attached to a wooden beam.

The in-built nails (31) are integrated with L shape beam member (20) and are strong in nature to resist hammer blow on it and properly functioned and are very efficient in case of the wooden beam and gives greater efficiency than the normal nails. The in-built nails (31) help to mount the mounting box (10) to the installation beam (38) directly by a hammer stroke. The in-built nails (31) are re-bent and lock to the wall of the horizontal plate (22) so that the L shape beam member (20) is attached to a metal beam via the slots (30). The slots (30) are used for receiving screws, for securing the mounting box (10) to the L shape beam member (20). The slots (30) may be elongated for adjustable connection of the mounting box (10) to the beam.

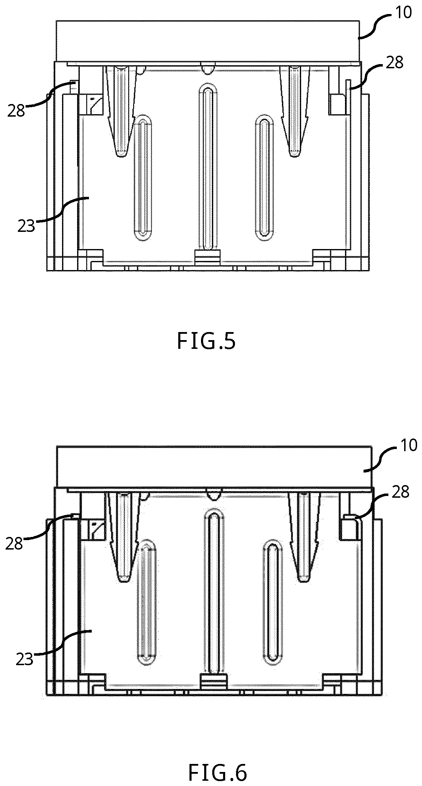

Referring to FIGS. 5-6 a cross sectional view of the mounting bracket assembly (5) showing the flange (28) before and after bending is illustrated, in accordance with an exemplary first embodiment of the present invention. The flange (28) protrudes through the L shaped bracket (26) and the J shaped bracket (27). The flange (28) is bent after the L shaped bracket (26) and the J shaped bracket (27) slide on the rails (18) to lock the L shape beam member (20) with the mounting box (10) and to hold the mounting box (10) from external mounting push forces and keep the mounting box (10) in place. Such locking mechanism avoids removing of the L shape beam member (20) from the mounting box (10) and facilitates concrete tightness and withstands all kinds of forces.

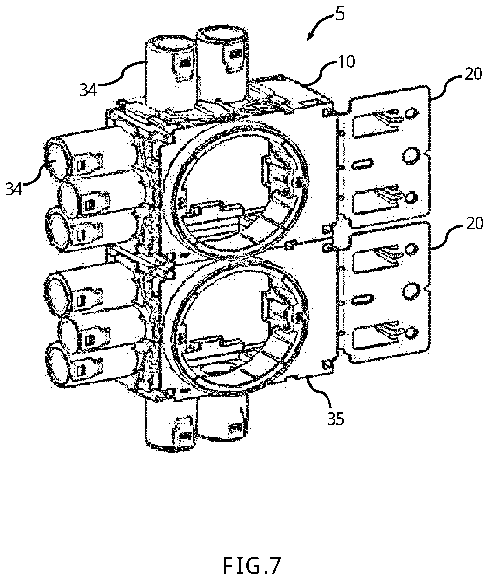

FIG. 7 illustrates a perspective view of the mounting bracket assembly (5) with the mounting box (10) assembled with the L shape beam member (20), in accordance with an exemplary first embodiment of the present invention. In the illustrated embodiments various types of mounting box (10) are mounted to the installation beam (38) using the mounting bracket assembly (5). The L shape beam member (20) may be used for mounting a single mounting box, for example as shown in FIGS. 3-4, or may be used for mounting multiple mounting boxes, as shown in FIG. 7. The receiving rails (18) located on other sides of the mounting box (10) hold a plurality of stubs (34) or another mounting box (35). The receiving rails (18) on the mounting box (10) are common for all stubs and box to box docking. The mounting box also includes several nailing option, for example, 45 degree cross nailing and side nailing provision (not shown) to mount the mounting box (10) to the installation beam (38).

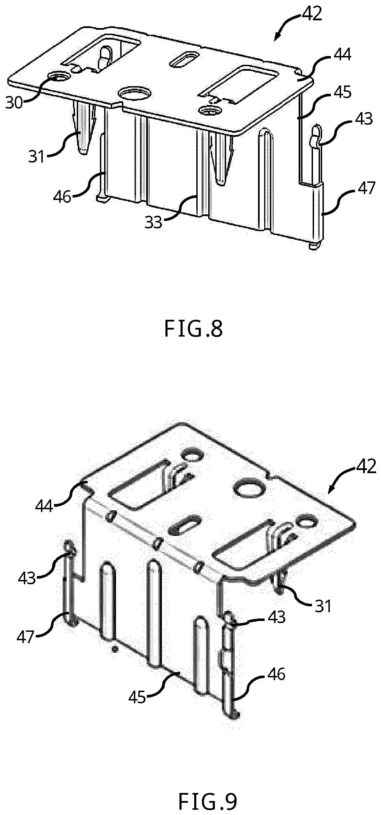

FIGS. 8-9 illustrate a front and back view of an adjustable L shape beam member (42), in accordance with an exemplary second embodiment of the present invention. The adjustable L shape beam member (42) is composed of a vertical plate (45) and a top horizontal plate (44). The top horizontal plate (44) is formed with a plurality of in-built nails (31) and slots (30) through which the L shape beam member (42) attached to the installation beam (38). An L shaped bracket (46) is formed on one side of the vertical plate (45) and a J shaped bracket (47) is formed on its other side. The L shaped bracket (46) and thej shaped bracket (47) further include a semicircular hook (43) located at its end.

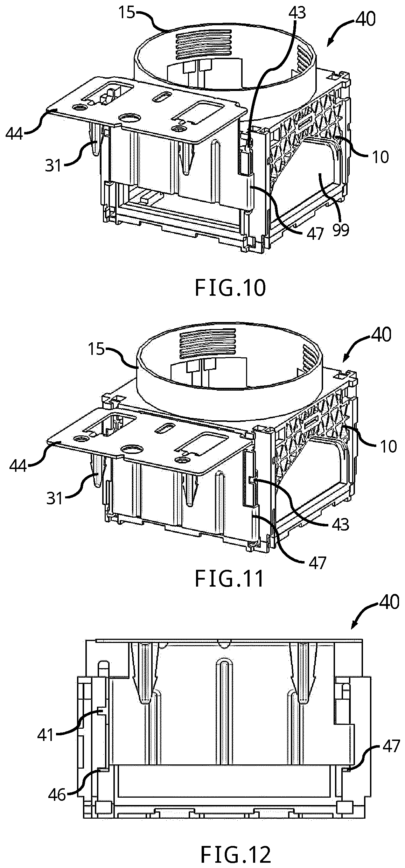

FIG. 10 illustrates an assembled view of an adjustable mounting bracket assembly (40) assembled at a first location, in accordance with an exemplary second embodiment of the present invention. A mounting box (10) includes four side walls (11, 12, 13, 14) and a circular projection (15) with an open end (16) on its top side (17). The mounting box (10) is used for mounting the electrical components that is accessible through the opening (16). The mounting box (10) is composed of two laterally spaced rails (18) on each side walls (11, 12, 13, 14) with at least two semicircular recesses (41, 48) spaced apart from each other along a longitudinal axis of the rails (18). The L shape beam member (42) is locked with the mounting box (10) at multiple locations. The L shaped bracket (46) and thej shaped bracket (47) slides on the rails (18) on one sidewall so that the semicircular hook (43) is positioned and locked within a first semicircular recess (41) at the first location as shown in FIG. 10. The L shaped bracket (46) and thej shaped bracket (47) slides on the rails (18) from the back side of the mounting box (10). Note that the installation box is also referred as mounting box only for the purpose of explanation, but not by the way of any limitations.

Referring to FIG. 11 an assembled view of the adjustable mounting bracket assembly (40) assembled at a second location is illustrated, in accordance with an exemplary second embodiment of the present invention. The L shaped bracket (46) and the J shaped bracket (47) also slide on the rails (18) on one sidewall so that the semicircular hook (43) is positioned and locked a second semicircular recess (48) at a second location. The L shape beam member (42) is adjusted to achieve different heights based on various dimensions of the installation beam (38) without removing the adjustable L shape beam member (42) from the mounting box (10).

Referring to FIG. 12, a cross sectional view of the mounting bracket assembly (40) is illustrated, in accordance with an exemplary second embodiment of the present invention. The adjustable mounting bracket assembly (40) is used to securely mount the mounting box (10) to the beam, or other structural element, such as a stud, wall panel, etc., using the in-built nails (31), screws or other fastening members. The screws are traversed through the slots (30) provided on the L shape beam member (42) and fastened to the beam. The mounting box (10) is used for stub adjustable beam fixing, box to box docking and also robust beam fixing.

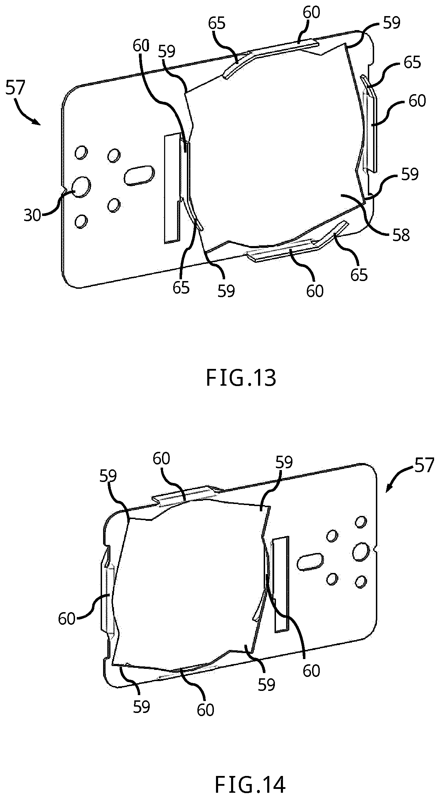

FIGS. 13-14 illustrate a side view of a rotatable beam member (57), in accordance with an exemplary third embodiment of the present invention. The rotatable beam member (57) includes an opening (58) with a wedge shape recess (59) on its corner and a curved projection (60) in between the wedge shape recess (59). A hook (65) is formed at each end of the curved projection (60). The rotatable beam member (57) may be made of any of a variety of suitable materials, for example steel or another metal, based on design consideration. Similar reference numerals for same components or parts are being marked and referred in all the embodiments of the present invention only for the purpose of easy understanding of the invention, but it is not by the way of any limitations.

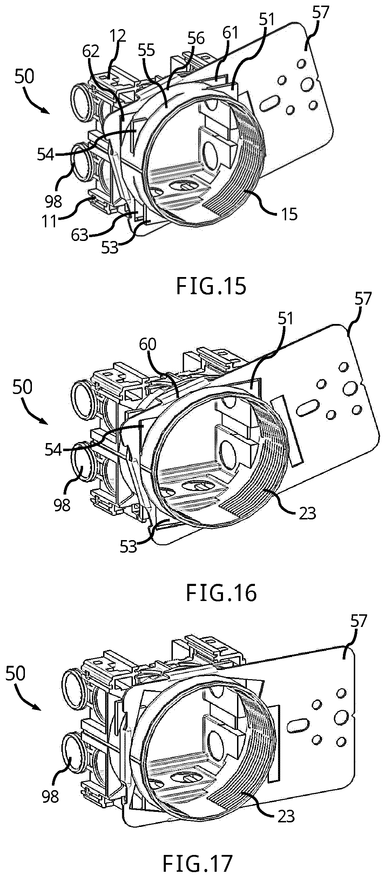

FIGS. 15-17 illustrate an assembled view of a rotatable mounting bracket assembly (50) showing the rotatable beam member (57) locked with the mounting box (10) at multiple locations, in accordance with an exemplary third embodiment of the present invention. The rotatable mounting bracket assembly (50) includes the mounting box (10) includes with side walls (11, 12, 13, 14) and a circular projection (15). The four side walls (11, 12, 13, 14) of the mounting box (10) is composed of a plurality of integrated reducers (98) for access to the interior of the mounting box (10) from the sides and for holding multi diameter conduits or the like. The mounting box (10) further includes four wedges (51, 52, 53, 54) located on diagonally opposite sides of the circular projection (15) at its upper side (55). The mounting box (10) also includes four wedges (61, 62, 63, 64) and located on diagonally opposite sides of the circular projection (15) at its lower side (56).

The beam member (57) is locked with the mounting box (10) at multiple locations in such a way that the beam member (57) is assembled from top side (17) of the mounting box (10) using the circular projection (15). The wedge shape recess (59) are placed parallel to the wedges ((51, 52, 53, 54) and (61, 62, 63, 64)) on the mounting box (10), as shown in FIG. 15. With reference to FIG. 17, the beam member (57) is then rotated so that the hook (65) is positioned and locked with the wedges (51, 52, 53, 54) on the upper side (55) of the mounting box (10) at a first location. Alternatively, the hook (65) is also positioned and locked with the wedges (61, 62, 63, 64) on the lower side (56) of the mounting box (10) at a second location, as shown in FIG. 16. The beam member (57) is composed of a plurality of slots (30) through which the beam member (57) is attached to the installation beam (38).

In a preferred embodiment, the wedges (51, 52, 53, 54) on the upper side (55) of the mounting box (10) is placed at 12 mm height from a top end of the circular projection (15) and the wedges (61, 62, 63, 64) on the lower side (56) of the mounti ng box (10) is placed at 24 mm height from the top end of the circular projection (15). Adjustability is achieved by rotating and locking the beam member (57) in multiple position of the mounting box (10) without removing the rotatable beam member (57) from the mounting box (10). The beam member (57) is assembled from top side of the mounting box (10) using the circular projection (15) of the mounting box (10) and the beam member (57) is rotated axially with particular angle and fixed to get the adjustability.

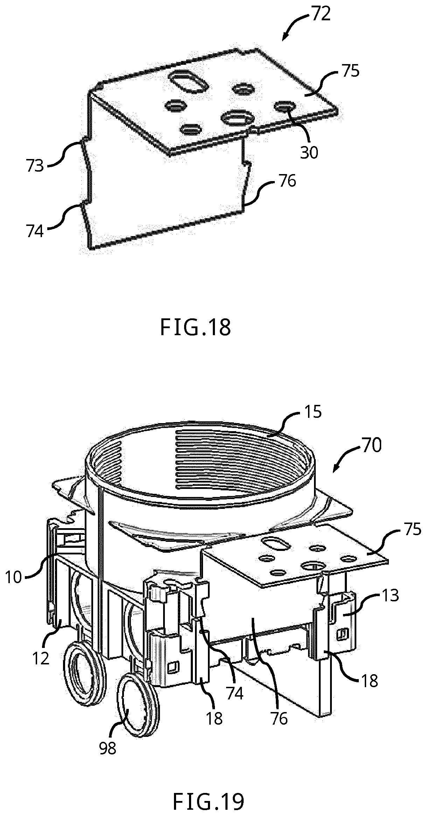

FIG. 18 illustrates a perspective of an L shape side dual clip beam member (72), in accordance with an exemplary fourth embodiment of the present invention. The L shape side dual clip beam member (72) is composed of a top horizontal plate (75) and a vertical plate (76) placed perpendicular to each other. The vertical plate (76) is composed of at least two projection (73, 74) spaced apart from each other along a longitudinal axis of the vertical plate (76) at its both sides.

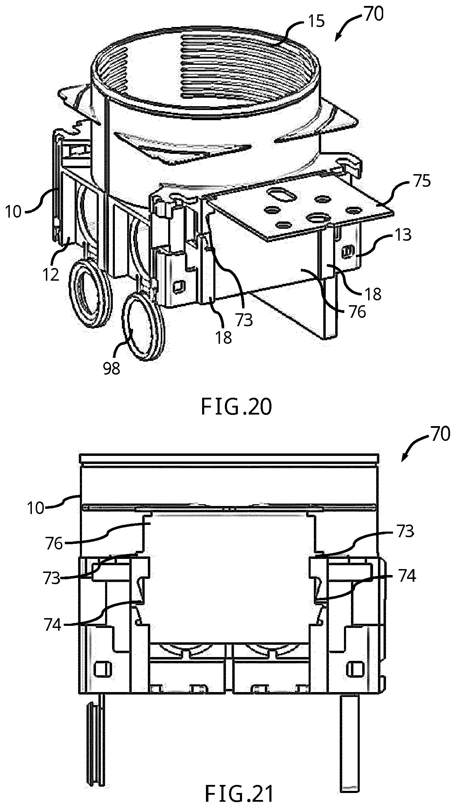

Referring to FIG. 19 an assembled view of a side dual clip mounting bracket assembly (70) assembled at a first location is illustrated, in accordance with an exemplary fourth embodiment of the present invention. The side dual clip mounting bracket assembly (70) includes the mounting box (10) with four side walls (11, 12, 13, 14) and a circular projection (15). The mounting box (10) comprises having two laterally spaced rails (18) on each side walls (11, 12, 13, 14) with an aperture (71) located on the rails (18). The four side walls (11, 12, 13, 14) of the mounting box (10) is composed of the integrated reducers (98) for holding multi diameter conduits or the like. The L shape beam member (72) is locked with the mounting box (10) at multiple locations in such a way that the verti cal plate (76) slides on the rails (18) on one si de wall so that a first projection (73) is positioned and locked within the aperture (71) at a first location. Alternatively, a second projection (74) is positioned and locked within the aperture (71) at a second location, as shown in FIG. 20.

FIG. 21 illustrates a cross sectional view of the side dual clip mounting bracket assembly (70), in accordance with an exemplary fourth embodiment of the present invention. The L shape beam member (72) is composed of a plurality of slots (30) through which the beam member (72) is attached to the installation beam (38).The L shape beam member (72) is adjusted to achieve different heights based on various dimensions of the installation beam (38) without removing the L shape side dual clip beam member (72) from the mounting box (10).

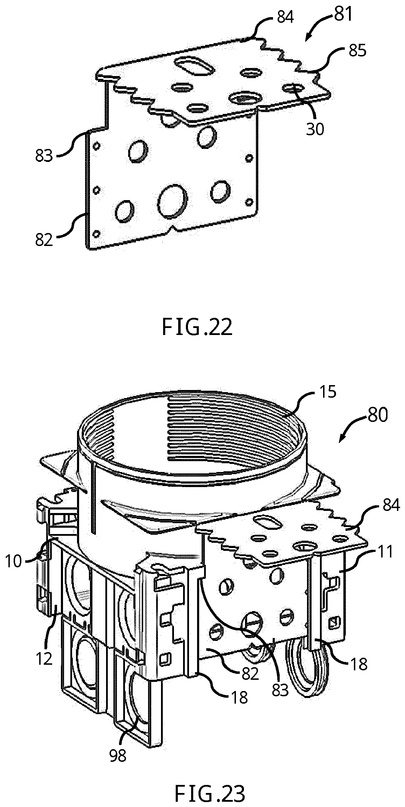

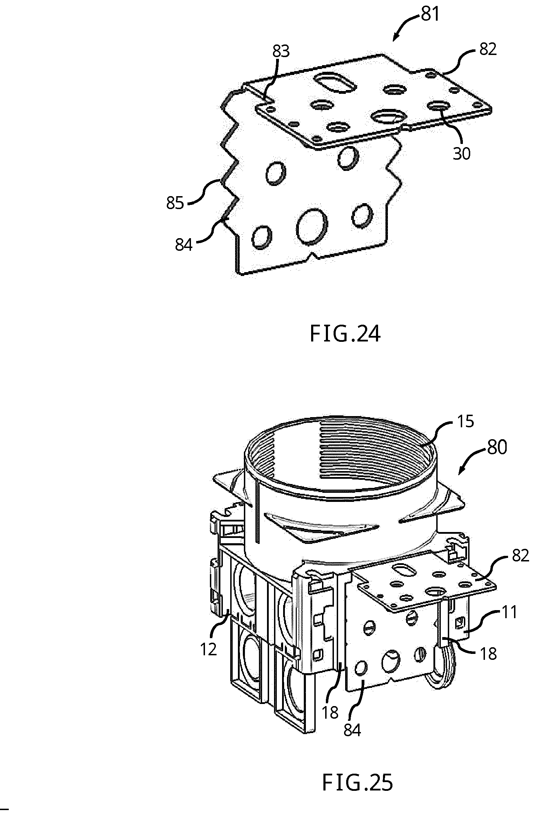

FIG. 22 and 24 illustrate a perspective of an L shape dual side lock beam member (81), in accordance with an exemplary fifth embodiment of the present invention. The L shape beam member (81) comprises a first plate (82) with a L shape cutout (83) on both sides of the first plate (82) and a second plate (84) with a saw tooth cutout (85) on both sides of the second plate (84). Referring to FIG. 23 a perspective of an L shape dual side lock mounting bracket assembly (80) showing the first plate (82) locked with the mounting box (10) is illustrated, in accordance with an exemplary fifth embodiment of the present invention.

The L shape dual side lock mounting bracket assembly (80) includes the mounting box (10) with four side walls (11, 12, 13, 14) and a circular projection (15). The mounting box (10) is composed of two laterally spaced rails (18) on each side walls (11, 12, 13, 14). The four side walls (11, 12, 13, 14) of the mounting box (10) is composed of the integrated reducers (98) for holding multi diameter conduits or the like. The L shape beam member (81) is locked with the mounting box (10) by sliding both sides of the L shape beam member (81) on the rails (18) of the mounting box (10). The first plate (82) slides on the rails (18) so that the L shape cut out (83) is positioned and locked within the rails (18).

Alternatively, the second plate (84) slides on the rails (18) so that the saw tooth cut out (85) is positioned and locked within the rails (18), as shown in FIG. 25. The first plate (82) and the second plate (84) is composed of a plurality of slots (30) through which the L shape beam member (81) is attached to the installation beam (38). As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for the claims and/or as a representative basis for teaching one skilled in the art to variously employ the present invention.

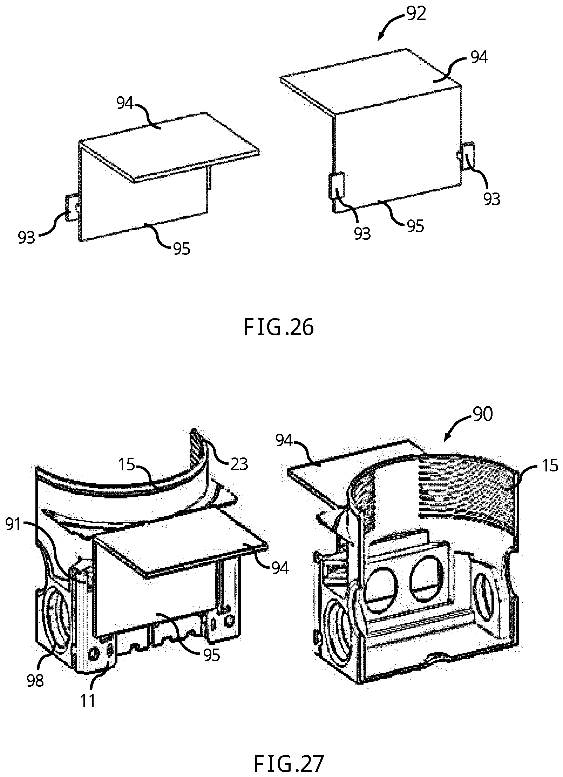

Referring to FIG. 26 a perspective of a manual gear lever L shape beam member (92) is illustrated, in accordance with an exemplary sixth embodiment of the present invention. The L shape beam member (92) includes a top horizontal plate (94) and a vertical plate (95) with a hook (93) on its both sides. Referring to FIG. 27 a perspective of a manual gear lever mounting bracket assembly (90) assembled at a first location is illustrated, in accordance with an exemplary sixth embodiment of the present invention. The manual gear lever mounting bracket assembly (90) includes the mounting box (10) with four side walls (11, 12, 13, 14) and the circular projection (15).

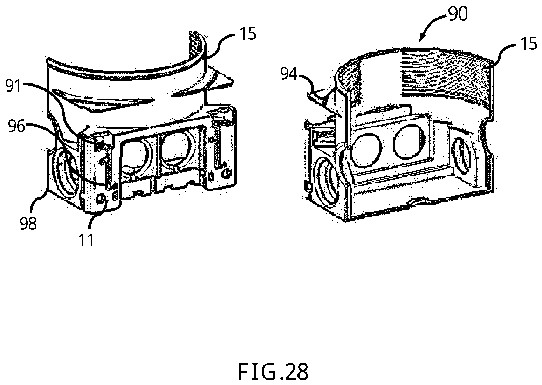

The mounting box (10) further includes two laterally spaced rails (18) on each side walls (11, 12, 13, 14) and two slots (91, 96) located on each side of the rails (18). The four side walls (11, 12, 13, 14) of the mounti ng box (10) is composed of the integrated reducers (98) for holding multi diameter conduits or the like. The L shape beam member (92) is locked with the mounting box (10) at multiple locations in such a way that the vertical plate (95) slides on the rails (18) so that the hook (93) is positioned and locked within a first slot (91) at a first location. Alternatively, the hook (93) is also positioned and locked within a second slot (96) at a second location, as shown in FIG. 28. The L shape beam member (92) is adjusted to achieve different heights based on various dimensions of an installation beam (38) surface without removing the manual gear lever L shape beam member (92) from the mounting box (10).

The present invention is easy to assemble and save time and additional process in the assembly line. The mounting box (10) is easily attached to the installation beam (38) via the mounting bracket assembly (5, 40, 50, 70, 80, 90). Adjustability is achieved by using the mounting bracket assembly (40, 50, 70, 80, 90) to accommodate different thickness of the installation boards (39). The mounting bracket assembly (5, 40, 50, 70, 80, 90) can readily adapted to a variety of ranges of operation, has a comparatively low cost of construction, is readily assembled, presents a low risk of damage to the inner electrical components during assembly or operation, is accurate and reliable in operation than known prior art.

It will be appreciated that variations of the above-disclosed and other features and functions, or alternatives thereof, as defined by the attached claims, may be desirably combined into many other different systems or applications. Also that various presently unforeseen or unanticipated alternatives, modifications, variations or improvements therein, within the scope of the attached claims, may be subsequently made by those skilled in the art and are as such also intended to be encompassed by the following claims.

## Claims

1. A mounting bracket assembly (5) for an electrical installation box, comprising:
a mounting box (10) having four side walls (11-14) and a circular projection (15) with an open end (16) on its top side (17), the mounting box (10) having two laterally spaced rails (18) on each side walls (11-14) ;
an L shape beam member (20) having a top horizontal plate (22) with a plurality of in-built nails (31) and slots (30) through which the L shape beam member (20) attached to an installation beam (38) and a vertical plate (23);
an L shaped bracket (26) formed on one side of the vertical plate (23) and a J shaped bracket (27) formed on its other side, the L shaped bracket (26) and the J shaped bracket (27) having a flange (28) on its top side (29);
wherein the L shaped bracket (26) and the J shaped bracket (27) slide on the rails (18) on one side wall, and the flange (28) is bent to lock the L shape beam member (20) with the mounting box (10) **characterized in that**
the mounting box (10) has two projections (19) on each bottom side (21) of the mounting box (10), and the vertical plate (23) having an extended portion (24) at its open end with two slots (25) spaced apart from each other, and the slots (25) on the vertical plate (23) are positioned and locked with the projections (19) on the mounting box (10) to firmly hold the mounting box.

2. The mounting bracket assembly (5) as claimed in claim 1, wherein the vertical plate (23) is composed of a plurality of sliders (33) that provide additional support to lock the L shape beam member (20) with the mounting box (10).

3. The mounting bracket assembly (5) as claimed in claim 1, wherein the L shaped bracket (26) is composed of a securing element (32) for securing the L shape beam member (20) with the mounting box (10).

4. The mounting bracket assembly (5) as claimed in claim 1, wherein the receiving rails (18) located on other sides of the mounting box (10) hold a plurality of stubs (34) or another mounting box (35).

5. The mounting bracket assembly (5) as claimed in claim 1, wherein the in-built nails (31) are placed perpendicular to the top horizontal plate (22) through which the L shape beam member (20) is attached to a wooden beam or the in-built nails (31) are re-bent and the L shape beam member (20) is attached to a metal beam via the slots (30).

6. The mounting bracket assembly (5) as claimed in claim 1, wherein an adjustable mounting bracket assembly (40) for an electrical installation box, comprises:
a mounting box (10) having four side walls (11-14) and a circular projection (15) with an open end (16) on its top side (17), the mounting box (10) having two laterally spaced rails (18) on each side walls (11-14) with at least two semicircular recesses (41, 48) spaced apart from each other along a longitudinal axis of the rails (18);
an adjustable L shape beam member (42) having a vertical plate (45) and a top horizontal plate (44) with a plurality of in-built nails (31) and slots (30) through which the L shape beam member (42) attached to an installation beam (38); and
an L shaped bracket (46) formed on one side of the vertical plate (45) and a J shaped bracket (47) formed on its other side, the L shaped bracket (46) and the J shaped bracket (47) having a semicircular hook (43) located at its end;
wherein the L shape beam member (42) is locked with the mounting box (10) at multiple locations in such a way that the L shaped bracket (46) and the J shaped bracket (47) slide on the rails (18) on one sidewall so that the semicircular hook (43) is positioned and locked within a first semicircular recess (41) at a first location, or the semicircular hook (43) is positioned and locked within a second semicircular recess (48) at a second location.

7. The mounting bracket assembly (40) as claimed in claim 6, wherein the L shape beam member (42) is adjusted to achieve different heights based on various dimensions of the installation beam (38).

8. The mounting bracket assembly (5) as claimed in claim 1, wherein an rotatable mounting bracket assembly (50) for an electrical installation box, comprises:
a mounting box (10) having four side walls (11-14) and a circular projection (15) with an open end (16) on its top side (17), the mounting box (10) having four wedges (51-54) and (61- 64) located on diagonally opposite sides of the circular projection (15) at its upper side (55) and a lower side (56) respectively;
a rotatable beam member (57) having an opening (58) with a wedge shape recess (59) on its corner and a curved projection (60) in between the wedge shape recess (59) with a hook (65) at each end of the curved projection (60),
wherein the beam member (57) is locked with the mounting box (10) at multiple locations in such a way that the beam member (57) is assembled via the circular projection (15) and the wedge shape recess (59) are placed parallel to the wedges and the beam member (57) is then rotated so that the hook (65) is positioned and locked with the wedges (51- 54) on the upper side (55) of the mounting box (10) at a first location, or the hook (65) is positioned and locked with the wedges (61- 64) on the lower side (56) of the mounting box (10) at a second location.

9. The mounting bracket assembly (50) as claimed in claim 8, wherein the beam member (57) is composed of a plurality of slots (30) through which the beam member (57) is attached to an installation beam (38).

10. The mounting bracket assembly (50) as claimed in claim 8, wherein the wedges (51-54) on the upper side (55) of the mounting box (10) are placed at 12 mm height from a top end of the circular projection (15) and the wedges (61- 64) on the lower side (56) of the mounting box (10) are placed at 24 mm height from the top end of the circular projection (15).

11. The mounting bracket assembly (5) as claimed in claim 1, wherein a side dual clip mounting bracket assembly (70) for an electrical installation box, comprises:
a mounting box (10) having four side walls (11-14) and a circular projection (15) with an open end (16) on its top side (17), the mounting box (10) having two laterally spaced rails (18) on each side walls (11-14) with an aperture (71) located on each rails (18);
an L shape beam member (72) having a top horizontal plate (75) and a vertical plate (76) with at least two projection (73, 74) spaced apart from each other along a longitudinal axis of the vertical plate (76) at its both sides,
wherein the L shape beam member (72) is locked with the mounting box (10) at multiple locations in such a way that the vertical plate (76) slides on the rails (18) on one side wall so that a first projection (73) is positioned and locked within the aperture (71) at a first location or a second projection (74) is positioned and locked within the aperture (71) at a second location.

12. The mounting bracket assembly (70) as claimed in claim 11, wherein the L shape beam member (72) is adjusted to achieve different heights based on various dimensions of an installation beam (38) surface.

13. The mounting bracket assembly (70) as claimed in claim 11, wherein the L shape beam member (72) is composed of a plurality of slots (30) through which the beam member (72) is attached to the installation beam (38).

14. The mounting bracket assembly (5) as claimed in claim 1, wherein a dual side slide lock mounting bracket assembly (80) for an electrical installation box, comprises:
a mounting box (10) having four side walls (11-14) and a circular projection (15) with an open end (16) on its top side (17), the mounting box (10) having two laterally spaced rails (18) on each side walls (11-14);
an L shape beam member (81) having a first plate (82) with an L shape cutout (83) on its both sides and a second plate (84) having a saw tooth cutout (85) on its both sides,
wherein the L shape beam member (81) is locked with the mounting box (10) in such a way that the first plate (82) slides on the rails (18) so that the L shape cut out (83) is positioned and locked within the rails (18) or the second plate (84) slides on the rails (18) so that the saw tooth cut out (85) is positioned and locked within the rails (18).

15. The mounting bracket assembly (80) as claimed in claim 14, wherein the first plate (82) and the second plate (84) is composed of a plurality of slots (30) through which the L shape beam member (81) is attached to an installation beam (38).

16. The mounting bracket assembly (5) as claimed in claim 1, wherein a manual gear lever mounting bracket assembly (90) for an electrical installation box, comprises:
a mounting box (10) having four side walls (11-14) and a circular projection (15) with an open end (16) on its top side (17), the mounting box (10) having two laterally spaced rails (18) on each side walls (11-14) and two slots (91, 96) located on each rails (18);
an L shape beam member (92) having a top horizontal plate (94) and a vertical plate (95) with a hook (93) on its both sides;
wherein the L shape beam member (92) is locked with the mounting box (10) at multiple locations in such a way that the vertical plate (95) slides on the rails (18) so that the hook (93) is positioned and locked within a first slot (91) at a first location, or the hook (93) is positioned and locked within a second slot (96) at a second location.

17. The mounting bracket assembly (90) as claimed in claim 16, wherein the L shape beam member (92) is adjusted to achieve different heights based on various dimensions of an installation beam (38) surface.

## Patentansprüche

1. Montagehalterungsanordnung (5) für einen elektrischen Installationskasten, umfassend:
einen Montagekasten (10), der vier Seitenwände (11-14) und einen kreisförmigen Vorsprung (15) mit einem offenen Ende (16) an seiner Oberseite (17) aufweist, wobei der Montagekasten (10) zwei seitlich beabstandete Schienen (18) an jeder Seitenwand (11-14) aufweist;
ein L-förmiges Trägerelement (20), das eine obere horizontale Platte (22) mit einer Vielzahl von eingebauten Nägeln (31) und Schlitzen (30) aufweist, durch die das L-förmige Trägerelement (20) an einem Installationsträger (38) und einer vertikalen Platte (23) befestigt wird;
eine L-förmige Halterung (26), die auf einer Seite der vertikalen Platte (23) ausgebildet ist, und eine J-förmige Halterung (27), die auf ihrer anderen Seite ausgebildet ist, wobei die L-förmige Halterung (26) und die J-förmige Halterung (27) einen Flansch (28) auf ihrer Oberseite (29) aufweisen;
wobei die L-förmige Halterung (26) und die J-förmige Halterung (27) auf den Schienen (18) an einer Seitenwand gleiten und der Flansch (28) gebogen ist, um das L-förmige Trägerelement (20) mit dem Montagekasten (10) zu verriegeln, **dadurch gekennzeichnet, dass**
der Montagekasten (10) zwei Vorsprünge (19) auf jeder Unterseite (21) des Montagekastens (10) aufweist und die vertikale Platte (23) einen erweiterten Abschnitt (24) an ihrem offenen Ende mit zwei Schlitzen (25) aufweist, die voneinander beabstandet sind, und die Schlitze (25) auf der vertikalen Platte (23) mit den Vorsprüngen (19) auf dem Montagekasten (10) positioniert und verriegelt sind, um den Montagekasten festzuhalten.

2. Montagehalterungsanordnung (5) nach Anspruch 1, wobei die vertikale Platte (23) aus einer Vielzahl von Gleitern (33) zusammengesetzt ist, die zusätzliche Unterstützung bereitstellen, um das L-förmige Trägerelement (20) mit dem Montagekasten (10) zu verriegeln.

3. Montagehalterungsanordnung (5) nach Anspruch 1, wobei die L-förmige Halterung (26) aus einem Sicherungselement (32) zum Sichern des L-förmigen Trägerelements (20) mit dem Montagekasten (10) zusammengesetzt ist.

4. Montagehalterungsanordnung (5) nach Anspruch 1, wobei die Aufnahmeschienen (18), die sich auf anderen Seiten des Montagekastens (10) befinden, eine Vielzahl von Stutzen (34) oder einen anderen Montagekasten (35) halten.

5. Montagehalterungsanordnung (5) nach Anspruch 1, wobei die eingebauten Nägel (31) senkrecht zu der oberen horizontalen Platte (22) platziert sind, durch die das L-förmige Trägerelement (20) an einem Holzträger befestigt wird, oder die eingebauten Nägel (31) zurückgebogen sind und das L-förmige Trägerelement (20) über die Schlitze (30) an einem Metallträger befestigt wird.

6. Montagehalterungsanordnung (5) nach Anspruch 1, wobei eine anpassbare Montagehalterungsanordnung (40) für einen elektrischen Installationskasten umfasst:
einen Montagekasten (10), der vier Seitenwände (11-14) und einen kreisförmigen Vorsprung (15) mit einem offenen Ende (16) an seiner Oberseite (17) aufweist, wobei der Montagekasten (10) zwei seitlich beabstandete Schienen (18) an jeder Seitenwand (11-14) mit mindestens zwei halbkreisförmigen Aussparungen (41, 48) aufweist, die entlang einer Längsachse der Schienen (18) voneinander beabstandet sind;
ein anpassbares L-förmiges Trägerelement (42), das eine vertikale Platte (45) und eine obere horizontale Platte (44) mit einer Vielzahl von eingebauten Nägeln (31) und Schlitzen (30) aufweist, durch die das L-förmige Trägerelement (42) an einem Installationsträger (38) befestigt wird; und
eine L-förmige Halterung (46), die auf einer Seite der vertikalen Platte (45) ausgebildet ist, und eine J-förmige Halterung (47), die auf ihrer anderen Seite ausgebildet ist, wobei die L-förmige Halterung (46) und die J-förmige Halterung (47) einen halbkreisförmigen Haken (43) aufweisen, der sich an ihrem Ende befindet;
wobei das L-förmige Trägerelement (42) mit dem Montagekasten (10) an mehreren Stellen derart verriegelt wird, dass die L-förmige Halterung (46) und die J-förmige Halterung (47) auf den Schienen (18) an einer Seitenwand gleiten, so dass der halbkreisförmige Haken (43) innerhalb einer ersten halbkreisförmigen Aussparung (41) an einer ersten Stelle positioniert und verriegelt wird, oder der halbkreisförmige Haken (43) innerhalb einer zweiten halbkreisförmigen Aussparung (48) an einer zweiten Stelle positioniert und verriegelt wird.

7. Montagehalterungsanordnung (40) nach Anspruch 6, wobei das L-förmige Trägerelement (42) angepasst ist, um unterschiedliche Höhen basierend auf unterschiedlichen Abmessungen des Installationsträgers (38) zu erreichen.

8. Montagehalterungsanordnung (5) nach Anspruch 1, wobei eine drehbare Montagehalterungsanordnung (50) für einen elektrischen Installationskasten umfasst:
einen Montagekasten (10), der vier Seitenwände (11-14) und einen kreisförmigen Vorsprung (15) mit einem offenen Ende (16) an seiner Oberseite (17) aufweist, wobei der Montagekasten (10) vier Keile (51-54) und (61-64) aufweist, die sich jeweils auf diagonal gegenüberliegenden Seiten des kreisförmigen Vorsprungs (15) an seiner Oberseite (55) und einer Unterseite (56) befinden;
ein drehbares Trägerelement (57), das eine Öffnung (58) mit einer keilförmigen Aussparung (59) an seiner Ecke und einen gekrümmten Vorsprung (60) zwischen den keilförmigen Aussparungen (59) mit einem Haken (65) an jedem Ende des gekrümmten Vorsprungs (60) aufweist,
wobei das Trägerelement (57) mit dem Montagekasten (10) an mehreren Stellen derart verriegelt wird, dass das Trägerelement (57) über den kreisförmigen Vorsprung (15) zusammengebaut wird und die keilförmigen Aussparungen (59) parallel zu den Keilen platziert sind, und das Trägerelement (57) dann gedreht wird, so dass der Haken (65) mit den Keilen (51-54) auf der Oberseite (55) des Montagekastens (10) an einer ersten Stelle positioniert und verriegelt wird, oder der Haken (65) mit den Keilen (61-64) auf der Unterseite (56) des Montagekastens (10) an einer zweiten Stelle positioniert und verriegelt wird.

9. Montagehalterungsanordnung (50) nach Anspruch 8, wobei das Trägerelement (57) aus einer Vielzahl von Schlitzen (30) zusammengesetzt ist, durch die das Trägerelement (57) an einem Installationsträger (38) befestigt wird.

10. Montagehalterungsanordnung (50) nach Anspruch 8, wobei die Keile (51-54) auf der Oberseite (55) des Montagekastens (10) in einer Höhe von 12 mm von einem oberen Ende des kreisförmigen Vorsprungs (15) platziert sind und die Keile (61-64) auf der Unterseite (56) des Montagekastens (10) in einer Höhe von 24 mm von dem oberen Ende des kreisförmigen Vorsprungs (15) platziert sind.

11. Montagehalterungsanordnung (5) nach Anspruch 1, wobei eine seitliche Doppelclip-Montagehalterungsanordnung (70) für einen elektrischen Installationskasten umfasst:
einen Montagekasten (10), der vier Seitenwände (11-14) und einen kreisförmigen Vorsprung (15) mit einem offenen Ende (16) an seiner Oberseite (17) aufweist, wobei der Montagekasten (10) zwei seitlich beabstandete Schienen (18) an jeder Seitenwand (11-14) mit einer Öffnung (71) aufweist, die sich an jeder Schiene (18) befindet;
ein L-förmiges Trägerelement (72), das eine obere horizontale Platte (75) und eine vertikale Platte (76) mit mindestens zwei Vorsprüngen (73, 74) aufweist, die entlang einer Längsachse der vertikalen Platte (76) an ihren beiden Seiten voneinander beabstandet sind,
wobei das L-förmige Trägerelement (72) mit dem Montagekasten (10) an mehreren Stellen derart verriegelt wird, dass die vertikale Platte (76) auf den Schienen (18) an einer Seitenwand gleitet, so dass ein erster Vorsprung (73) innerhalb der Öffnung (71) an einer ersten Stelle positioniert und verriegelt wird oder ein zweiter Vorsprung (74) innerhalb der Öffnung (71) an einer zweiten Stelle positioniert und verriegelt wird.

12. Montagehalterungsanordnung (70) nach Anspruch 11, wobei das L-förmige Trägerelement (72) angepasst ist, um unterschiedliche Höhen basierend auf unterschiedlichen Abmessungen einer Oberfläche eines Installationsträgers (38) zu erreichen.

13. Montagehalterungsanordnung (70) nach Anspruch 11, wobei das L-förmige Trägerelement (72) aus einer Vielzahl von Schlitzen (30) zusammengesetzt ist, durch die das Trägerelement (72) an dem Installationsträger (38) befestigt wird.

14. Montagehalterungsanordnung (5) nach Anspruch 1, wobei eine zweiseitige Gleitverriegelungs-Montagehalterungsanordnung (80) für einen elektrischen Installationskasten umfasst:
einen Montagekasten (10), der vier Seitenwände (11-14) und einen kreisförmigen Vorsprung (15) mit einem offenen Ende (16) an seiner Oberseite (17) aufweist, wobei der Montagekasten (10) zwei seitlich beabstandete Schienen (18) an jeder Seitenwand (11-14) aufweist;
ein L-förmiges Trägerelement (81), das eine erste Platte (82) mit einem L-förmigen Ausschnitt (83) auf ihren beiden Seiten und eine zweite Platte (84) aufweist, die einen Sägezahnausschnitt (85) auf ihren beiden Seiten aufweist,
wobei das L-förmige Trägerelement (81) mit dem Montagekasten (10) derart verriegelt wird, dass die erste Platte (82) auf den Schienen (18) gleitet, so dass der L-förmige Ausschnitt (83) innerhalb der Schienen (18) positioniert und verriegelt wird, oder die zweite Platte (84) auf den Schienen (18) gleitet, so dass der Sägezahnausschnitt (85) innerhalb der Schienen (18) positioniert und verriegelt wird.

15. Montagehalterungsanordnung (80) nach Anspruch 14, wobei die erste Platte (82) und die zweite Platte (84) aus einer Vielzahl von Schlitzen (30) zusammengesetzt sind, durch die das L-förmige Trägerelement (81) an einem Installationsträger (38) befestigt wird.

16. Montagehalterungsanordnung (5) nach Anspruch 1, wobei eine manuelle Schalthebel-Montagehalterungsanordnung (90) für einen elektrischen Installationskasten umfasst:
einen Montagekasten (10), der vier Seitenwände (11-14) und einen kreisförmigen Vorsprung (15) mit einem offenen Ende (16) an seiner Oberseite (17) aufweist, wobei der Montagekasten (10) zwei seitlich beabstandete Schienen (18) an jeder Seitenwand (11-14) und zwei Schlitze (91, 96) aufweist, die sich an jeder Schiene (18) befinden;
ein L-förmiges Trägerelement (92), das eine obere horizontale Platte (94) und eine vertikale Platte (95) mit einem Haken (93) auf ihren beiden Seiten aufweist;
wobei das L-förmige Trägerelement (92) mit dem Montagekasten (10) an mehreren Stellen derart verriegelt wird, dass die vertikale Platte (95) auf den Schienen (18) gleitet, so dass der Haken (93) innerhalb eines ersten Schlitzes (91) an einer ersten Stelle positioniert und verriegelt wird, oder der Haken (93) innerhalb eines zweiten Schlitzes (96) an einer zweiten Stelle positioniert und verriegelt wird.

17. Montagehalterungsanordnung (90) nach Anspruch 16, wobei das L-förmige Trägerelement (92) angepasst ist, um unterschiedliche Höhen basierend auf unterschiedlichen Abmessungen einer Oberfläche eines Installationsträgers (38) zu erreichen.

## Revendications

1. Ensemble de support de montage (5) pour une boîte d'installation électrique, comprenant :
une boîte de montage (10) dotée de quatre parois latérales (11-14) et d'une saillie circulaire (15) avec une extrémité ouverte (16) sur sa face supérieure (17), la boîte de montage (10) présentant deux rails (18) espacés latéralement sur chaque paroi latérale (11-14) ;
un élément de poutre en L (20) présentant une plaque horizontale supérieure (22) avec une pluralité de clous intégrés (31) et de fentes (30) à travers lesquels l'élément de poutre en L (20) est fixé à une poutre d'installation (38) et à une plaque verticale (23) ;
un support en forme de L (26) formé sur un côté de la plaque verticale (23) et un support en forme de J (27) formé sur son autre côté, le support en forme de L (26) et le support en forme de J (27) présentant une bride (28) sur son côté supérieur (29) ;
dans lequel le support en forme de L (26) et le support en forme de J (27) coulissent sur les rails (18) sur une paroi latérale, et la bride (28) est courbée pour verrouiller l'élément de poutre en L (20) avec la boîte de montage (10) **caractérisé en ce que**
la boîte de montage (10) présente deux saillies (19) sur chaque côté inférieur (21) de la boîte de montage (10), et la plaque verticale (23) présentant une partie étendue (24) à son extrémité ouverte avec deux fentes (25) espacées l'une de l'autre, et les fentes (25) sur la plaque verticale (23) sont positionnées et verrouillées avec les saillies (19) sur la boîte de montage (10) pour maintenir fermement la boîte de montage.

2. Ensemble de support de montage (5) selon la revendication 1, dans lequel la plaque verticale (23) est composée d'une pluralité de curseurs (33) qui fournissent un support supplémentaire pour verrouiller l'élément de poutre en L (20) avec la boîte de montage (10).

3. Ensemble de support de montage (5) selon la revendication 1, dans lequel le support en forme de L (26) est composé d'un élément de fixation (32) pour fixer l'élément de poutre en L (20) avec la boîte de montage (10).

4. Ensemble de support de montage (5) selon la revendication 1, dans lequel les rails de réception (18) situés sur d'autres côtés de la boîte de montage (10) maintiennent une pluralité d'ergots (34) ou une autre boîte de montage (35).

5. Ensemble de support de montage (5) selon la revendication 1, dans lequel les clous intégrés (31) sont placés perpendiculairement à la plaque horizontale supérieure (22) à travers laquelle l'élément de poutre en L (20) est fixé à une poutre en bois ou les clous intégrés (31) sont repliés et l'élément de poutre en L (20) est fixé à une poutre métallique par l'intermédiaire des fentes (30).

6. Ensemble de support de montage (5) selon la revendication 1, dans lequel un ensemble de support de montage réglable (40) pour une boîte d'installation électrique, comprend :
une boîte de montage (10) dotée de quatre parois latérales (11-14) et une saillie circulaire (15) avec une extrémité ouverte (16) sur sa face supérieure (17), la boîte de montage (10) présentant deux rails (18) espacés latéralement sur chaque paroi latérale (11-14) avec au moins deux évidements semi-circulaires (41, 48) espacés les uns des autres le long d'un axe longitudinal des rails (18) ;
un élément de poutre en L réglable (42) présentant une plaque verticale (45) et une plaque horizontale supérieure (44) avec une pluralité de clous intégrés (31) et de fentes (30) à travers lesquels l'élément de poutre en L (42) est fixé à une poutre d'installation (38) ; et
un support en forme de L (46) formé sur un côté de la plaque verticale (45) et un support en forme de J (47) formé sur son autre côté, le support en forme de L (46) et le support en forme de J (47) présentant un crochet semi-circulaire (43) situé à son extrémité ;
dans lequel l'élément de poutre en L (42) est verrouillé avec la boîte de montage (10) à des emplacements multiples de telle sorte que le support en forme de L (46) et le support en forme de J (47) coulissent sur les rails (18) sur une paroi latérale de sorte que le crochet semi-circulaire (43) est positionné et verrouillé dans un premier évidement semi-circulaire (41) à un premier emplacement, ou le crochet semi-circulaire (43) est positionné et verrouillé dans un deuxième évidement semi-circulaire (48) à un deuxième emplacement.

7. Ensemble de support de montage (40) selon la revendication 6, dans lequel l'élément de poutre en L (42) est ajusté pour atteindre différentes hauteurs sur la base de différentes dimensions de la poutre d'installation (38).

8. Ensemble de support de montage (5) selon la revendication 1, dans lequel un ensemble de support de montage rotatif (50) pour une boîte d'installation électrique, comprend :
une boîte de montage (10) présentant quatre parois latérales (11-14) et une saillie circulaire (15) avec une extrémité ouverte (16) sur sa face supérieure (17), la boîte de montage (10) présentant quatre cales (51-54) et (61-64) situées sur des côtés opposés en diagonale de la saillie circulaire (15) au niveau de son côté supérieur (55) et un côté inférieur (56) respectivement ;
un élément de poutre rotatif (57) doté d'une ouverture (58) avec un évidement en forme de cale (59) sur son angle et une saillie incurvée (60) entre l'évidement en forme de cale (59) avec un crochet (65) à chaque extrémité de la saillie incurvée (60),
dans lequel l'élément de poutre (57) est verrouillé avec la boîte de montage (10) à des de multiples emplacements d'une manière telle que l'élément de poutre (57) est assemblé par l'intermédiaire de la saillie circulaire (15) et l'évidement en forme de cale (59) sont disposés parallèlement aux cales et l'élément de poutre (57) est ensuite tourné de sorte que le crochet (65) soit positionné et verrouillé avec les cales (51-54) sur le côté supérieur (55) de la boîte de montage (10) au niveau d'un premier emplacement, ou le crochet (65) soit positionné et verrouillé avec les cales (61-64) sur le côté inférieur (56) de la boîte de montage (10) au niveau d'un deuxième emplacement.

9. Ensemble de support de montage (50) selon la revendication 8, dans lequel l'élément de poutre (57) est composé d'une pluralité de fentes (30) à travers lesquelles l'élément de poutre (57) est fixé à une poutre d'installation (38).

10. Ensemble de support de montage (50) selon la revendication 8, dans lequel les cales (51-54) sur le côté supérieur (55) de la boîte de montage (10) sont placées à une hauteur de 12 mm d'une extrémité supérieure de la saillie circulaire (15) et les cales (61-64) sur le côté inférieur (56) de la boîte de montage (10) sont placées à une hauteur de 24 mm de l'extrémité supérieure de la saillie circulaire (15).

11. Ensemble de support de montage (5) selon la revendication 1, dans lequel un ensemble de support de montage de pince latérale double (70) pour une boîte d'installation électrique comprend :
une boîte de montage (10) présentant quatre parois latérales (11-14) et une saillie circulaire (15) avec une extrémité ouverte (16) sur son côté supérieur (17), la boîte de montage (10) possédant deux rails (18) latéralement espacés sur chacune des parois latérales (11-14) avec une ouverture (71) située sur chacun des rails (18) ;
un élément de poutre en L (72) présentant une plaque horizontale supérieure (75) et une plaque verticale (76) avec au moins deux saillies (73, 74) espacées l'une de l'autre le long d'un axe longitudinal de la plaque verticale (76) au niveau de ses deux côtés ;
dans lequel l'élément de poutre en L (72) est verrouillé avec la boîte de montage (10) à des emplacements multiples de telle sorte que la plaque verticale (76) coulisse sur les rails (18) sur une paroi latérale de sorte qu'une première saillie (73) est positionnée et verrouillée dans l'ouverture (71) au niveau d'un premier emplacement ou une deuxième saillie (74) est positionnée et verrouillée à l'intérieur de l'ouverture (71) au niveau d'un deuxième emplacement.

12. Ensemble de support de montage (70) selon la revendication 11, dans lequel l'élément de poutre en L (72) est ajusté pour atteindre différentes hauteurs sur la base de différentes dimensions d'une surface de poutre d'installation (38).

13. Ensemble de support de montage (70) selon la revendication 11, dans lequel l'élément de poutre en L (72) est composé d'une pluralité de fentes (30) à travers lesquelles l'élément de poutre (72) est fixé à la poutre d'installation (38).

14. Ensemble de support de montage (5) selon la revendication 1, dans lequel un ensemble de support de montage de verrou à glissière à double côté (80) pour une boîte d'installation électrique, comprend :
une boîte de montage (10) dotée de quatre parois latérales (11-14) et d'une saillie circulaire (15) avec une extrémité ouverte (16) sur sa face supérieure (17), la boîte de montage (10) présentant deux rails (18) espacés latéralement sur chaque paroi latérale (11-14) ;
un élément de poutre en L (81) présentant une première plaque (82) avec une découpe en forme de L (83) sur ses deux côtés et une deuxième plaque (84) ayant une découpe en dent de scie (85) sur ses deux côtés,
dans lequel l'élément de poutre en L (81) est verrouillé avec la boîte de montage (10) de telle sorte que la première plaque (82) coulisse sur les rails (18) de sorte que la découpe en L (83) est positionnée et verrouillée dans les rails (18) ou la deuxième plaque (84) coulisse sur les rails (18) de sorte que la découpe en dents de scie (85) est positionnée et verrouillée dans les rails (18).

15. Ensemble de support de montage (80) selon la revendication 14, dans lequel la première plaque (82) et la deuxième plaque (84) sont composées d'une pluralité de fentes (30) à travers lesquelles l'élément de poutre en L (81) est fixé à une poutre d'installation (38).

16. Ensemble de support de montage (5) selon la revendication 1, dans lequel un ensemble de support de montage à levier d'engrenage manuel (90) pour une boîte d'installation électrique, comprend :
un support de montage (10) présentant quatre parois latérales (11-14) et une saillie circulaire (15) avec une extrémité ouverte (16) sur son côté supérieur (17), la boîte de montage (10) possédant deux rails (18) latéralement espacés sur chacune des parois latérales (11-14) et deux fentes (91, 96) situées sur chacun des rails (18) ;
un élément de poutre en L (92) présentant une plaque horizontale supérieure (94) et une plaque verticale (95) avec un crochet (93) sur ses deux côtés ;
dans lequel l'élément de poutre en L (92) est verrouillé avec la boîte de montage (10) à des multiples emplacements de telle sorte que la plaque verticale (95) coulisse sur les rails (18) de sorte que le crochet (93) est positionné et verrouillé à l'intérieur d'une première fente (91) au niveau d'un premier emplacement, ou le crochet (93) est positionné et verrouillé dans une deuxième fente (96) au niveau d'un deuxième emplacement.

17. Ensemble de support de montage (90) selon la revendication 16, dans lequel l'élément de poutre en L (92) est ajusté pour atteindre différentes hauteurs sur la base de différentes dimensions d'une surface de poutre d'installation (38).
